(19) Europäisches Patentamt
European Patent Office
Office européen des brevets

(11) EP 3 525 032 A1

(12) DEMANDE DE BREVET EUROPEEN

(43) Date de publication:
14.08.2019 Bulletin 2019/33

(51) Int Cl.:
G02B 27/01 (2006.01)

(21) Numéro de dépôt: 19156038.2

(22) Date de dépôt: 07.02.2019

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
KH MA MD TN

(30) Priorité: 07.02.2018 FR 1851020

(71) Demandeur: Valeo Comfort and Driving Assistance
94046 Créteil Cedex (FR)

(72) Inventeurs:
• LE MOUNIER, Florian
94046 Créteil CEDEX (FR)
• MERMILLOD, Pierre
94046 Créteil CEDEX (FR)
• HUSSON, Arnaud
94046 Créteil CEDEX (FR)

(74) Mandataire: Delplanque, Arnaud
VALEO Comfort and Driving Assistance
76, rue Auguste Perret
Z.I. Europarc
94046 Créteil Cedex (FR)

(54) AFFICHEUR TETE HAUTE PRESENTANT UNE DISTORSION REDUITE

(57) L'invention concerne un afficheur (1) tête haute comprenant une unité de génération d'image (2) comportant un écran (21) duquel émerge un faisceau lumineux (F) qui suit un chemin optique (Ch) menant de l'écran à une lame (3) partiellement transparente.

Selon l'invention, l'écran est incliné par rapport à la direction (D) présentée par ledit chemin optique en sortie de l'écran, d'un angle d'inclinaison (α) prédéterminé tel qu'un taux de déformation entre :

- une première image virtuelle de l'écran formée par réflexion du faisceau lumineux sur ladite lame, visualisée depuis un premier point d'observation (P1), et
- une deuxième image virtuelle de l'écran formée par réflexion du faisceau lumineux sur ladite lame, visualisée depuis un deuxième point d'observation (P2)
soit inférieur au taux de déformation obtenu lorsque l'écran est perpendiculaire à ladite direction.

Fig.2

EP 3 525 032 A1

## Description

DOMAINE TECHNIQUE AUQUEL SE RAPPORTE L'INVENTION

La présente invention concerne un afficheur tête haute.

Elle concerne plus précisément un tel afficheur, configuré pour afficher des images avec une distorsion réduite.

Elle s'applique de manière particulièrement intéressante dans un véhicule tel qu'un véhicule automobile.

ARRIERE-PLAN TECHNOLOGIQUE

Pour le conducteur d'un véhicule automobile, il est particulièrement confortable de pouvoir visualiser des informations relatives au fonctionnement du véhicule, relatives à une voie de circulation faisant face au véhicule, ou autres, sans avoir pour cela à détourner son regard de cette voie de circulation.

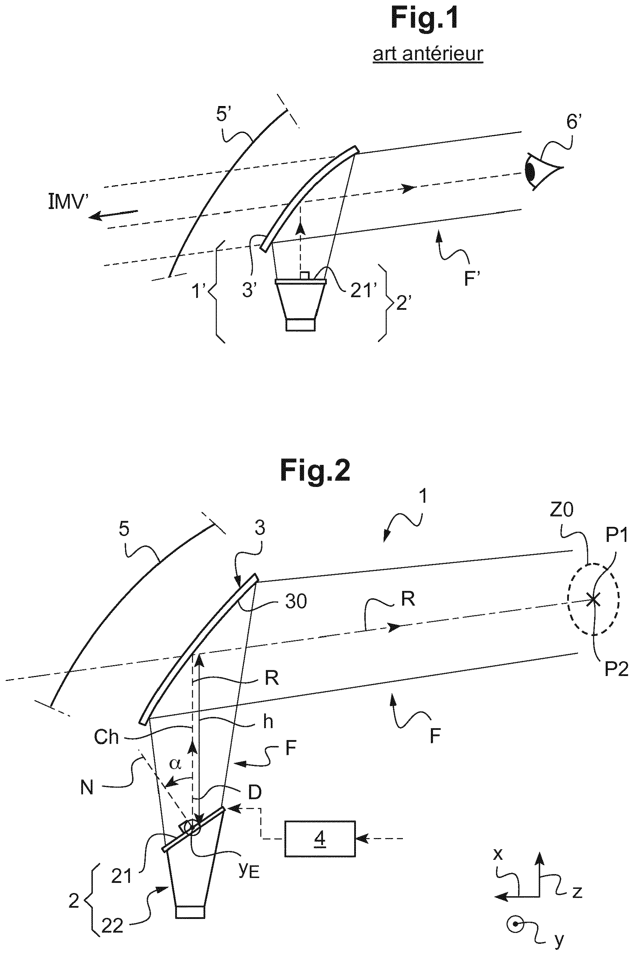

Il est connu dans ce but d'équiper le véhicule avec un afficheur 1' dit tête haute, tel que celui représenté sur la figure 1. Cet afficheur 1' comprenant une unité de génération d'image 2' qui comporte un écran 21' au niveau duquel une image à projeter est générée, et duquel émerge un faisceau lumineux F'.

L'unité de génération d'image 2' est orientée de manière à diriger le faisceau lumineux F' vers une lame 3' partiellement transparente courbe. Une image virtuelle IMV' de l'écran est alors formée par réflexion du faisceau lumineux F' sur cette lame 3'. Cette lame 3' partiellement transparente peut être formée par le pare-brise du véhicule, ou, comme c'est le cas pour l'afficheur 1' représenté sur la figure 1, par un composant optique dédié appelé combineur disposé entre le pare-brise 5' et les yeux 6' du conducteur.

Pour le conducteur, l'image virtuelle IMV' comportant les informations à afficher se superpose alors visuellement à l'environnement faisant face au véhicule.

Dans un tel système, l'unité de génération d'image 2' est décalée hors de l'axe d'observation qui relie les yeux 6' du conducteur à l'image virtuelle IMV', pour ne pas masquer cette image aux yeux du conducteur. La lame 3' est alors utilisée « hors axe », c'est-à-dire sous un angle d'incidence moyen élevé. L'image virtuelle IMV' formée par réflexion sur la lame partiellement transparente est alors déformée par rapport à l'image générée sur l'écran.

En outre, dans cette situation, la déformation causée par la réflexion sur la lame varie avec la position du point d'observation depuis lequel l'image virtuelle est visualisée. Ainsi, le conducteur voit l'image virtuelle se déformer lorsqu'il déplace sa tête, ce qui, entre autres, est susceptible de le distraire.

La déformation, par rapport à l'image générée sur l'écran, de l'image virtuelle visualisée depuis un point d'observation fixe donné, est appelée dans la suite distorsion statique.

La déformation de l'image virtuelle causée par un déplacement du point d'observation est appelée quant à elle distorsion dynamique.

OBJET DE L'INVENTION

Dans ce contexte, la présente invention propose un afficheur tête haute comprenant une unité de génération d'image comportant un écran au niveau duquel une image à projeter est générée, et duquel émerge un faisceau lumineux, le faisceau lumineux suivant un chemin optique menant de l'écran de l'unité de génération d'image à une lame partiellement transparente courbe.

Selon l'invention, l'écran est incliné par rapport à la direction présentée en sortie de l'écran par ledit chemin optique, d'un angle d'inclinaison prédéterminé tel qu'un taux de déformation entre :

- une première image virtuelle de l'écran formée par réflexion du faisceau lumineux sur ladite lame, visualisée depuis un premier point d'observation, et
- une deuxième image virtuelle de l'écran formée par réflexion du faisceau lumineux sur ladite lame, visualisée depuis un deuxième point d'observation

soit inférieur, pour ledit angle d'inclinaison, à un autre taux de déformation obtenu, entre la première image virtuelle et la deuxième image virtuelle, lorsque l'écran est perpendiculaire à ladite direction.

Incliner l'écran, par rapport à la direction présentée par ledit chemin optique en sortie de l'écran, présente deux inconvénients.

D'une part, l'écran doit être plus étendu que dans une configuration, classique, pour laquelle l'écran serait perpendiculaire à la direction du chemin optique.

D'autre part, incliner ainsi l'écran augmente généralement la distorsion statique.

Malgré ces inconvénients, la demanderesse propose d'incliner l'écran comme décrit ci-dessus.

Elle a en effet constaté qu'il est possible de réduire une composante au moins de la distorsion dynamique, correspondant au taux de déformation précité, par un choix approprié de l'angle d'inclinaison de l'écran.

Ainsi, la priorité est donnée à une correction de la distorsion dynamique (pourtant considérée habituellement comme une distorsion résiduelle, d'amplitude inférieure à celle la distorsion statique).

On peut prévoir que l'angle d'inclinaison de l'écran soit tel que le taux de déformation précité soit minimal, en plus d'être inférieur à l'autre taux de déformation (obtenu lorsque l'écran est perpendiculaire au chemin optique).

Par ailleurs, pour réduire ou supprimer la distorsion statique (qui a pu augmenter du fait de l'inclinaison de l'écran), on peut prévoir que l'afficheur comprenne en outre des moyens de correction, configurés pour compenser une déformation de la première image virtuelle par rapport à l'image à projeter introduite par la réflexion du faisceau lumineux sur ladite lame.

Ainsi, l'utilisateur visualise une image qui, non seulement, ne se déforme pas lorsqu'il déplace l'un de ses yeux entre les première et deuxième positions d'observation, mais qui en outre est non distordue par rapport à une image à afficher.

D'autres caractéristiques non limitatives et avantageuses de l'afficheur conforme à l'invention, prises individuellement ou selon toutes les combinaisons techniquement possibles, sont les suivantes :

- lesdits moyens de correction comprennent une unité de pilotage de l'écran programmée pour déterminer l'image à projeter, en fonction des données représentatives d'une image à afficher, en appliquant à l'image à afficher une transformation prédéterminée, inverse de ladite déformation de la première image virtuelle introduite par la réflexion du faisceau lumineux sur ladite lame ;
- lesdits moyens de correction comprennent au moins un composant optique disposé sur le trajet du faisceau lumineux, entre l'écran et la lame partiellement transparente courbe, ce composant introduisant une distorsion compensant ladite déformation de la première image virtuelle introduite par la réflexion du faisceau lumineux sur ladite lame ;
- l'écran est incliné par rapport à ladite direction, autour d'un axe perpendiculaire au plan d'incidence qui contient l'axe sur lequel est centré le faisceau lumineux incident sur la lame ainsi que l'axe sur lequel est centré le faisceau lumineux réfléchi par la lame ;

- l'axe qui passe par le premier point d'observation et par le deuxième point d'observation est perpendiculaire au plan d'incidence contenant l'axe sur lequel est centré le faisceau lumineux incident sur la lame ainsi que l'axe sur lequel est centré le faisceau lumineux réfléchi par la lame ;
- ledit taux de déformation est un taux de cisaillement de la deuxième image virtuelle par rapport à la première image virtuelle ;
- ledit taux de cisaillement est représentatif d'une déformation par cisaillement selon une direction de cisaillement parallèle à l'axe passant par le premier point d'observation et par le deuxième point d'observation ;
- ledit taux de déformation est un taux de variation de rapport d'aspect de la deuxième image virtuelle par rapport à la première image virtuelle.

## DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement, vu de côté, un afficheur tête haute d'un type connu, qui a été décrit plus haut dans la partie relative à l'arrière plan technologique,
- la figure 2 représente schématiquement, vu de côté, un afficheur tête haute mettant en oeuvre les enseignements de l'invention,
- la figure 3 représente schématiquement l'afficheur de la figure 2, vu de dessus,
- les figures 4A et 4B représentent schématiquement un mode de déformation entre une première image virtuelle et une deuxième image virtuelle affichées par l'afficheur de la figure 2,
- les figures 5A et 5B représentent schématiquement un autre mode de déformation entre les première et deuxième images virtuelles affichées par l'afficheur de la figure 2,
- les figures 6A à 6F représentent schématiquement des images affichées par l'afficheur de la figure 2, ou par un afficheur comparable mais dans lequel l'écran ne serait pas incliné.

La figure 2 représente les principaux éléments d'un afficheur 1 tête haute permettant d'afficher des images dans le champ de vision d'un utilisateur, les images affichées étant particulièrement peu déformées par rapport à une image de référence (appelée dans la suite image à afficher).

Dans le mode de réalisation décrit ici, l'afficheur 1 est installé dans un véhicule tel qu'un véhicule automobile, et l'utilisateur en question est le conducteur ce véhicule.

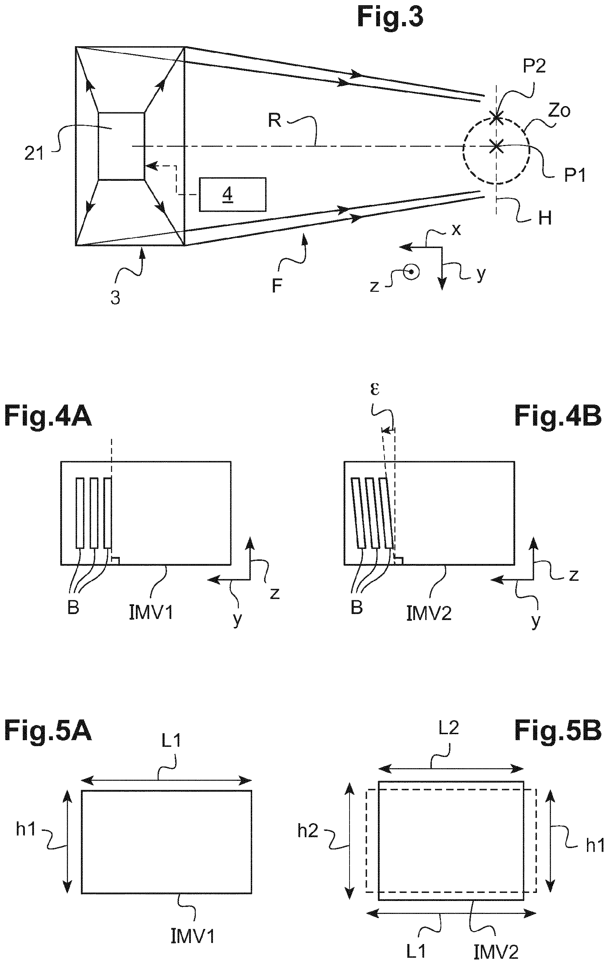

Sur la figure 2, l'afficheur est vu de côté, et sur la figure 3, il est vu de dessus. Un repère comprenant trois axes x, y et z, orthogonaux deux à deux, est introduit pour faciliter la compréhension de ces figures. L'axe x est l'axe longitudinal du véhicule, c'est-à-dire qu'il s'étend de l'arrière vers l'avant du véhicule. L'axe y est qui s'étend transversalement par rapport au véhicule et parallèlement à son plancher. L'axe z s'étend quant à lui perpendiculairement par rapport au plancher du véhicule.

L'afficheur 1 comprend une unité de génération d'image 2 qui comporte un écran 21 au niveau duquel une image à projeter IM est générée.

Cet écran 21 peut, comme ici, être réalisé au moyen d'un écran à cristaux liquides. L'unité de génération d'image 2 comprend alors un dispositif de rétro-éclairage 22 de l'écran 21. Le dispositif de rétro-éclairage 22 comprend une ou plusieurs sources de lumière, telles que des diodes électroluminescentes, et, ici, un réflecteur collectant la lumière émise par ces sources pour la diriger vers l'écran 21. Le faisceau lumineux F produit par ce dispositif sort de l'unité de génération d'image 2 par l'écran 21.

En variante, l'unité de génération d'image pourrait comprendre au moins une source émettant un faisceau laser, ainsi qu'un système de balayage (c'est-à-dire de déplacement) du faisceau laser, l'écran précité étant alors réalisé par exemple au moyen d'un écran diffusant. L'image à afficher est alors générée en balayant le faisceau laser sur une face de l'écran diffusant.

L'image à projeter IM est générée en fonction de données représentatives d'une image à afficher IMG.

Dans le mode de réalisation décrit ici, l'écran 21 est piloté par une unité de pilotage 4, en fonction desdites données. Ces données peuvent être reçues par l'unité de pilotage (et provenir par exemple d'une source externe à l'afficheur), ou être générées directement par l'unité de pilotage. L'unité de pilotage 4 comprend notamment un processeur et une mémoire. L'unité de pilotage 4 peut être programmée pour déterminer l'image à projeter IM en appliquant une ou plusieurs transformations à l'image à afficher IMG, telles qu'une modification de l'échelle des teintes, une rotation de l'image, une dilatation de l'image dans une direction, ou une autre déformation de cette image.

L'afficheur 1 est configuré pour projeter le faisceau lumineux F qui sort de l'écran 21 vers une lame 3 partiellement transparente courbe.

Dans le mode de réalisation décrit ici, le faisceau lumineux F se propage directement de l'unité de génération d'image 2 à la lame 3, sans rencontrer de composant optique susceptible de le dévier. Pour projeter le faisceau lumineux F vers la lame 3, l'unité de génération d'image 2 est donc orientée en direction de la lame 3 (figure 3).

Le faisceau lumineux F émis par l'unité de génération d'image 2 suit un chemin optique Ch, menant de l'écran 21 à la lame 3. Ce chemin optique correspond au trajet suivi par le rayon principal R du faisceau lumineux F, c'est-à-dire suivi par le rayon moyen sur lequel est centré ce faisceau.

Dans le cas présent, ce chemin optique Ch est un segment rectiligne reliant un centre de l'écran 21, à un centre de la lame 3.

On pourrait prévoir en variante qu'un système optique de projection soit disposé sur le trajet du faisceau lumineux, entre l'unité de génération d'image et la lame. Ce système optique de projection peut alors comprendre, par exemple, un ou plusieurs miroirs réfléchissant le faisceau lumineux pour l'envoyer finalement en direction de la lame. Cette disposition permet notamment d'augmenter la longueur du chemin optique suivi par le faisceau lumineux entre l'unité de génération d'image et la lame. Le chemin optique en question est alors formé de plusieurs segments successifs reliés les uns aux autres.

La lame 3 est réalisée ici au moyen d'un composant optique dédié (appelé combineur), disposé entre un pare-brise 5 du véhicule et les yeux du conducteur. Cette lame, formée par exemple en matière plastique transparente, présente du côté du conducteur une face 30 réfléchissante courbe, ici concave. Une ou plusieurs couches minces peuvent par exemple être appliquées sur cette face 30, pour augmenter la valeur du coefficient de réflexion du faisceau lumineux sur celle-ci.

La lame 3 réfléchit une partie au moins du faisceau lumineux F, en direction des yeux du conducteur, ce qui permet à ce dernier de visualiser l'image à projeter IM générée par l'écran, plus ou moins déformée par la réflexion sur la lame 3 (et éventuellement par le système optique de projection si l'afficheur comprend un tel système).

Comme la lame 3 est partiellement transparente, le conducteur peut voir cette image, tout en continuant à observer l'environnement du véhicule à travers la lame. L'image à projeter est ainsi superposée visuellement à l'environnement du véhicule.

Plus précisément, la lame 3 forme, par réflexion, une image virtuelle de l'écran, cette image virtuelle étant située, dans l'environnement du véhicule, à l'opposé du conducteur par rapport à la lame.

Le fait que la lame 3 soit courbe, en l'occurrence concave du côté du conducteur, permet de former l'image virtuelle de l'écran loin de l'afficheur (et donc loin du conducteur), par exemple à une distance de l'afficheur comprise entre 2 et 20 mètres. Autrement formulé, la lame joue ici le rôle d'un composant optique de focalisation (ayant une puissance optique). La face 30 réfléchissante de la lame 3 peut par exemple être sphérique (avec un rayon de courbure approprié pour former l'image virtuelle de l'écran à la distance précitée), ou en forme de paraboloïde (avec un rayon de courbure au sommet approprié pour former l'image virtuelle de l'écran à la distance précitée), ou être décrite par un polynôme (auquel cas une distance, entre un point courant de la face 30 et un plan moyen de la lame 3, varie de manière polynomiale en fonction de l'écart entre ce point de la face et le centre de la lame).

Dans d'autres modes de réalisation, non représentés, la lame partiellement transparente courbe qui réfléchit le faisceau lumineux vers les yeux du conducteur pourrait être réalisée sous la forme du pare-brise du véhicule. Dans ce cas, l'afficheur peut comprendre un composant optique supplémentaire, de focalisation, tel qu'un miroir concave, disposé sur le trajet du faisceau lumineux entre l'écran et le pare-brise du véhicule. Ce composant optique supplémentaire concoure alors, avec le pare-brise, à former l'image virtuelle précitée.

La réflexion du faisceau lumineux F sur la lame 3 définit un plan d'incidence, qui contient l'axe sur lequel est centré le faisceau lumineux F incident sur la lame 3 (c'est-à-dire son rayon principal R), ainsi que l'axe sur lequel est centré le faisceau lumineux F réfléchi par la lame 3. Le plan d'incidence est ici un plan longitudinal et vertical par rapport au véhicule. Autrement formulé, le plan d'incidence est ici parallèle au plan (x,z).

Pour que le conducteur puisse effectivement visualiser l'image virtuelle formée par l'afficheur, ses yeux doivent être situés dans une zone de l'espace appelée boite à oeil ZO (ou « eyebox », en anglais), atteinte, en sortie de l'afficheur 1, par une partie au moins du faisceau lumineux F émis par l'unité de génération d'image 2 (la boite à oeil ZO est par exemple située au niveau de la pupille de sortie de l'afficheur).

Deux points d'observation situés dans la boite à oeil ZO sont considérés plus précisément ici. Le premier point d'observation P1 est situé ici au centre de la boite à oeil ZO, tandis que le deuxième point d'observation P2 est situé sur le pourtour de la boite à oeil.

Le deuxième point d'observation P2 est décalé latéralement par rapport au premier point d'observation P1. Plus précisément, les premier et deuxième points d'observation P1 et P2 sont décalés ici l'un par rapport à l'autre, perpendiculairement au plan d'incidence (sur la figure 2, les premier et deuxième points d'observation P1 et P2 paraissent superposés, car la figure 2 est une vue de côté ; il est souligné toutefois que ces deux points sont décalés l'un par rapport à l'autre, comme le montre la vue de dessus de la figure 3). Vu l'orientation du plan d'incidence par rapport au véhicule, l'axe H qui passe par le premier point d'observation P1 et par le deuxième point d'observation P2 (et qui est perpendiculaire au plan d'incidence), s'étend donc parallèlement à l'axe y (axe transversal par rapport au véhicule, et horizontal). En pratique, c'est donc le long de l'axe H que l'oeil du conducteur se déplace le plus fréquemment lorsque le conducteur conduit.

Comme indiqué dans la partie relative à l'arrière-plan technologique, en l'absence de dispositions particulières pour corriger la distorsion dynamique introduite par la réflexion sur la lame 3,
une deuxième image virtuelle IMV2 de l'écran 21, formée par réflexion du faisceau lumineux sur ladite lame 3, visualisée depuis le deuxième point d'observation P2, est généralement déformée par rapport à
une première image virtuelle IMV1 de l'écran 21, formée par réflexion du faisceau lumineux sur ladite lame 3, visualisée depuis le premier point d'observation P1.

La déformation des ces deux images l'une par rapport à l'autre est due notamment au fait que les rayons lumineux qui parviennent au deuxième point d'observation P2, et ceux qui parviennent au premier point d'observation P1, sont réfléchis par des zones légèrement différentes de la lame, qui, en l'occurrence, est courbe.

Pour supprimer, ou tout au moins réduire cette distorsion dynamique, il est prévu ici, de manière remarquable, d'incliner l'écran 21 par rapport à la direction D présentée par ledit chemin optique Ch en sortie de l'écran 21, d'un angle d'inclinaison $\alpha$ prédéterminé.

L'angle d'inclinaison $\alpha$ (non nul) est formé entre ladite direction D, et une direction N perpendiculaire à l'écran 21 (figure 2).

L'angle d'inclinaison $\alpha$ est déterminé, lors d'une phase de conception ou de réglage de l'afficheur, de sorte que :

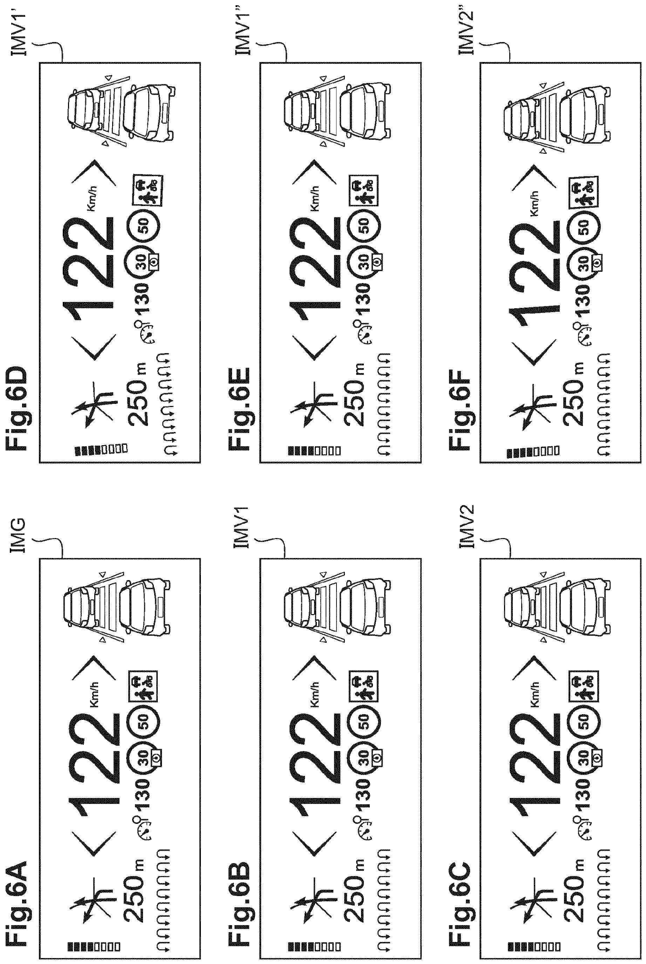

- un taux de déformation $\tau$ entre la première image virtuelle IMV1 (figure 6B) et la deuxième image virtuelle IMV2 (figure 6C) soit inférieur, pour ledit angle d'inclinaison $\alpha$, à

- un autre taux de déformation $\tau_o$, obtenu entre la première image virtuelle (IMV1", figure 6E) et la deuxième image virtuelle (IMV2", figure 6F) lorsque l'écran est perpendiculaire à ladite direction D.

Incliner l'écran 21, plutôt que de le disposer perpendiculairement à la direction D présentée par ledit chemin optique Ch en sortie de l'écran 21, permet, tout au moins pour certaines inclinaisons, de réduire la valeur du taux de déformation $\tau$, et donc de corriger au moins en partie la distorsion dynamique.

On peut prévoir en outre que l'angle d'inclinaison $\alpha$ soit, comme ici, déterminé de manière à minimiser le taux de déformation $\tau$. Le taux de déformation $\tau$ obtenu est alors non seulement plus petit que lorsque l'écran est perpendiculaire à ladite direction D, mais, en outre, minimal, voir nul.

L'écran 21 est incliné par rapport à ladite direction D, autour d'un axe $y_E$ perpendiculaire au plan d'incidence (figure 2). Autrement formulé, l'écran 21 est incliné de manière que la direction N, perpendiculaire à l'écran, reste parallèle au plan d'incidence. L'angle d'inclinaison $\alpha$ repère la position angulaire de l'écran 21 autour de l'axe $y_E$ mentionné ci-dessus.

Le taux de déformation $\tau$ et ledit autre taux de déformation $\tau_o$, sont associés à un même mode déformation donné, par exemple un mode de déformation par cisaillement, ou par modification d'un rapport d'aspect entre les deux images virtuelles, ou encore un mode de déformation par courbure.

En l'occurrence, dans le mode de réalisation décrit ici, le taux de déformation $\tau$ est un taux de cisaillement, associé à une déformation par cisaillement selon une direction de cisaillement parallèle à l'axe H passant par le premier point d'observation P1 et par le deuxième point d'observation P2. Cette direction de cisaillement est donc, ici, perpendiculaire au plan d'incidence (cisaillement parallèlement à l'axe y).

La demanderesse a constaté que, lorsque les premier et deuxième points d'observation P1 et P2 sont, comme ici, décalés l'un par rapport à l'autre perpendiculairement au plan d'incidence, la deuxième image virtuelle IMV2 est déformée par rapport à la première image virtuelle IMV1 principalement par cisaillement (avec une direction de cisaillement perpendiculaire au plan d'incidence).

Déterminer l'angle d'inclinaison $\alpha$ de manière à minimiser le taux de cisaillement entre les première et deuxième images virtuelles IMV1 et IMV2 permet donc, pour ce choix des premier et deuxième points d'observation P1 et P2, de corriger l'essentiel de la distorsion dynamique.

L'angle d'inclinaison $\alpha$ est déterminé ici, lors d'une phase de conception de l'afficheur 1, en déterminant, grâce à des simulations par ordinateur, pour plusieurs angles d'inclinaison envisagés α1, α2, α3, ..., une pluralité correspondante de taux de déformation τ1, τ2, τ3, ... entre la première image virtuelle IMV1 et la deuxième image virtuelle IMV2. Ici, au cours de cette procédure, pour chacun de ces angles d'inclinaison, les conditions d'affichage de la première image virtuelle sont préalablement optimisées (correction de la distorsion statique, décrite en détail plus bas), avant de simuler la deuxième image virtuelle puis de déterminer le taux de déformation entre ces deux images (distorsion dynamique).

L'angle d'inclinaison α est alors déterminé par exemple en sélectionnant, parmi les angles d'inclinaison envisagés α1, α2, α3, ..., celui pour lequel le taux de déformation τ1, τ2, τ3, ... est le plus faible.

Pour déterminer chacun des taux de déformation τi, i=1, 2, 3,... on peut prévoir de :

- déterminer, par simulation, la première image virtuelle et la deuxième image virtuelle, puis
- déterminer, par traitement d'images, le taux de déformation τi entre des deux images.

Comme déjà indiqué, le taux de déformation τi, i=1, 2, 3,... est ici un taux de cisaillement dans la direction y (cisaillement parallèlement à une direction, qui, dans l'environnement du véhicule, est horizontale).

Ce taux de cisaillement peut être déterminé, à titre d'exemple, en comparant l'orientation de motifs donnés, tels que des barres ou des chiffres, entre la première image virtuelle IMV1 et la deuxième image virtuelle IMV2 (figures 4A et 4B).

Par exemple, la première image virtuelle IMV1 peut être générée de manière à présenter plusieurs barres B, dont chacune s'étend perpendiculairement à l'axe de cisaillement (axe y), donc ici parallèlement à l'axe z (figure 4A). Du fait du cisaillement précité, dans la deuxième image virtuelle IMV2, ces barres sont alors inclinées par rapport à l'axe z (figure 4B). Le taux de déformation τi, i=1, 2, 3,... peut alors être déterminé, par exemple, comme étant égal à la valeur absolue de l'angle ε formé, dans la deuxième image virtuelle IMV2, entre l'une de ces barres B et l'axe z, soit τi = |ε|.

A titre d'exemple, l'afficheur 1 peut être configuré de la manière suivante :

- la face 30 réfléchissante de la lame 3 présente une forme de paraboloïde de révolution, avec un rayon de courbure au sommet de 0,48 mètre,
- l'angle d'incidence moyen du faisceau lumineux F sur cette lame 3 est égal à 24 degrés environ, et lorsque
- la hauteur h, qui sépare le centre de l'écran 21 du centre de la lame est égale à 0,1 mètre environ.

Pour cette configuration, l'angle d'inclinaison α déterminé comme expliqué ci-dessus, pour lequel le taux de déformation τ précité est minimal, est alors égal à 29 degrés. L'écran 21 est alors approximativement parallèle à la lame 3.

Dans d'autres modes de réalisation de l'afficheur, non représentés, on pourrait prévoir que :

- les premier et deuxième points d'observation, pour lesquels on cherche à obtenir des images virtuelles identiques, soient disposés différemment de ce qui a été décrit plus haut, et que
- l'angle d'inclinaison α de l'écran soit déterminé de manière à réduire, ou minimiser, un taux de déformation autre qu'un taux de cisaillement.

Par exemple, dans tel mode de réalisation, on peut prévoir que les premier et deuxième points d'observation sont décalés selon l'axe z l'un par rapport à l'autre, mais tout en étant tous deux situés dans le plan d'incidence (l'axe qui passe par le premier point d'observation et par le deuxième point d'observation s'étend alors parallèlement au plan d'incidence, par exemple perpendiculairement au plancher du véhicule).

La demanderesse a constaté que, dans ce cas, la déformation entre les première et deuxième images virtuelles correspond principalement à une variation de rapport d'aspect.

Pour réduire au mieux cette déformation, on peut prévoir alors que l'angle d'inclinaison α soit déterminé de manière à minimiser non plus un taux de cisaillement, mais un taux de variation de rapport d'aspect.

Plus précisément, le taux de déformation τ', sur la base duquel est déterminé l'angle d'inclinaison α optimal, peut dans ce cas être déterminé conformément à la formule suivante :

$$\tau' = \left| \frac{r2 - r1}{r1} \right|$$

où r2=L2/h2 est le rapport d'aspect de la deuxième image virtuelle IMV2 (figure 5B), et où r1=L1/h1 est le rapport d'aspect de la première image virtuelle IMV1 (figure 5A).

Pour le mode de réalisation de l'afficheur 1 qui a été décrit en détail plus haut, en référence aux figures 2 et 3, l'angle d'inclinaison α est déterminé de manière à minimiser un taux de cisaillement (plutôt qu'un taux de variation de rapport d'aspect, par exemple), notamment parce que l'image virtuelle se déforme principalement par cisaillement lorsque le conducteur déplace ses yeux horizontalement, ce qui correspond au déplacement le plus fréquent en pratique.

La réflexion sur la lame 3, courbe, introduit, en plus de la distorsion dynamique qui est minimisée grâce à l'inclinaison de l'écran 21, une distorsion statique, c'est-à-dire une déformation de la première image virtuelle IMV1 par rapport à l'image à projeter IM générée au niveau de l'écran 21.

L'afficheur comprend des moyens de correction, configurés pour compenser cette distorsion statique, de manière à réduire, ou même supprimer, la déformation de la première image virtuelle IMV1 par rapport à l'image à afficher IMG.

Dans le mode de réalisation représenté sur les figures 2 et 3, ces moyens de correction comprennent l'unité de pilotage 4 de l'écran 21, qui est programmée pour déterminer l'image à projeter IM, générée sur l'écran 21, en appliquant à l'image à afficher IMG des transformations prédéterminées, inverses des déformations introduites ensuite par la réflexion sur la lame 3.

Déterminer l'image à projeter IM en appliquant ces transformations (inverses) à l'image à afficher IMG permet alors de compenser les déformations introduites ensuite par la réflexion sur la lame 3.

Ces transformations inverses, à appliquer à l'image à afficher IMG, sont déterminées lors d'une phase de conception ou de réglage de l'afficheur.

Pour cela, on peut prévoir par exemple de déterminer la première image virtuelle, par simulation sur ordinateur, dans un cas où l'image à projeter représente par exemple une mire de référence. La première image virtuelle correspond alors à une version déformée de l'image à projeter, cette dernière ayant subie différentes déformations, telles qu'une dilatation selon une direction donnée, une rotation, un cisaillement, une déformation en trapèze, ou encore une déformation en barillet ou en coussinet. Les caractéristiques de ces déformations peuvent être déterminées par traitement de la première image virtuelle. Pour chacune de ces déformations, une transformation inverse est alors déterminée. A titre d'exemple, si la première image virtuelle déterminée lors de cette simulation numérique présente, par rapport à l'image à projeter correspondante, une dilatation d'un facteur f parallèlement à la largeur de l'image, alors, la transformation inverse correspondante sera une dilatation, d'un facteur 1/f, parallèlement à la largeur de l'image.

L'unité de pilotage 4 est ensuite programmée pour, une fois en service, déterminer l'image à projeter IM en appliquant ces transformations inverses à l'image à afficher IMG.

Pré-compenser ainsi, de manière électronique, la distorsion introduite par la réflexion sur la lame 3 rend l'afficheur facilement reconfigurable. Cette disposition apporte par ailleurs une souplesse de conception plus grande que ce qui serait obtenu par une compensation optique de la distorsion statique. En effet, la détermination des transformations inverses à appliquer à l'image à afficher est généralement plus rapide et plus facile à réaliser que la détermination des caractéristiques d'un système optique de compensation.

Cette souplesse de conception est d'autant plus appréciable que, lors de la recherche de l'angle d'inclinaison α optimal, il peut s'avérer nécessaire pour chaque angle d'inclinaison envisagé α1, α2, α3, ..., de commencer par compenser la distorsion statique avant de pouvoir déterminer ensuite le taux de déformation, résiduel, correspondant à la distorsion dynamique.

On peut toutefois prévoir, en variante, que les moyens de correction de la distorsion statique comprennent, au lieu de l'unité de pilotage de l'écran, au moins un composant optique disposé sur le trajet du faisceau lumineux, entre l'écran et la lame partiellement transparente courbe. Ce composant est alors conformé et disposé de manière à introduire une distorsion inverse de celle introduite par la lame. Il peut par exemple être réalisé sous la forme d'une lentille convergente dont l'axe optique est incliné par rapport au rayon principal du faisceau lumineux.

Les première et deuxième images virtuelles IMV1 et IMV2 affichées par l'afficheur 1, pour l'exemple d'image à afficher IMG représentée sur la figure 6A, sont représentées respectivement sur les figures 6B et 6C.

On constate sur cet exemple que les moyens de correction de la distorsion statique décrits plus haut sont particulièrement efficaces, puisque la première image virtuelle IMV1 (figure 6B) est très peu déformée par rapport à l'image à afficher IMG (figure 6A).

A titre de comparaison, la figure 6D représente la première image virtuelle IMV1', telle qu'elle serait obtenue en générant directement sur l'écran une image identique à l'image à afficher IMG de la figure 6A (donc sans pré-compensation électronique de la distorsion statique). La figure 6D correspond par ailleurs à une situation dans laquelle l'écran est perpendiculaire au rayon principal du faisceau lumineux émis par l'unité de génération d'image.

On constate d'autre part que, grâce à l'inclinaison de l'écran, la deuxième image virtuelle IMV2 (figure 6C) est particulièrement peu déformée par rapport à la première image virtuelle IMV1 (figure 6B).

A titre de comparaison, les figures 6E et 6F représentent respectivement les première et deuxième images virtuelles IMV1", IMV2" affichées lorsque l'écran est perpendiculaire au chemin optique suivi par le faisceau lumineux en sortie de l'écran (la distorsion statique ayant par ailleurs été corrigée). Comme déjà indiqué, on constate alors que la deuxième image virtuelle IMV2" est déformée, en l'occurrence par cisaillement, par rapport à la première image virtuelle IMV1".

**Revendications**

1. Afficheur (1) tête haute comprenant :

   - une unité de génération d'image (2) comportant un écran (21) au niveau duquel une image à projeter (IM) est générée, et duquel émerge un faisceau lumineux (F),

   le faisceau lumineux (F) suivant un chemin optique (Ch) menant de l'écran (21) de l'unité de génération d'image à une lame (3) partiellement transparente courbe,
   **caractérisé en ce que**
   l'écran (21) est incliné par rapport à la direction (D)

présentée par ledit chemin optique en sortie de l'écran (21), d'un angle d'inclinaison (α) prédéterminé tel qu'un taux de déformation entre :

- une première image virtuelle (IMV1) de l'écran (21) formée par réflexion du faisceau lumineux sur ladite lame (3), visualisée depuis un premier point d'observation (P1), et
- une deuxième image virtuelle (IMV2) de l'écran (21) formée par réflexion du faisceau lumineux sur ladite lame (3), visualisée depuis un deuxième point d'observation (P2)

soit inférieur, pour ledit angle d'inclinaison (α), à un autre taux de déformation obtenu, entre la première image virtuelle et la deuxième image virtuelle, lorsque l'écran est perpendiculaire à ladite direction.

2. Afficheur selon la revendication 1, dans lequel angle d'inclinaison (α) de l'écran (21) est tel que ledit taux de déformation soit minimal.

3. Afficheur selon l'une des revendications 1 et 2, comprenant en outre des moyens de correction configurés pour compenser une déformation de la première image virtuelle (IMV1) par rapport à l'image à projeter (IM) introduite par la réflexion du faisceau lumineux (F) sur ladite lame (3).

4. Afficheur selon la revendication 3, dans lequel lesdits moyens de correction comprennent une unité de pilotage (4) de l'écran (21) programmée pour déterminer l'image à projeter (IM), en fonction des données représentatives d'une image à afficher (IMG), en appliquant à l'image à afficher (IMG) une transformation prédéterminée, inverse de ladite déformation de la première image virtuelle (IMV1) introduite par la réflexion du faisceau lumineux (F) sur ladite lame (3).

5. Afficheur selon l'une des revendications 3 et 4, dans lequel lesdits moyens de correction comprennent au moins un composant optique disposé sur le trajet du faisceau lumineux, entre l'écran et la lame partiellement transparente courbe, ce composant introduisant une distorsion compensant ladite déformation de la première image virtuelle (IMV1) introduite par la réflexion du faisceau lumineux (F) sur ladite lame (3).

6. Afficheur selon l'une des revendications 1 à 5, dans lequel l'écran (21) est incliné par rapport à ladite direction (D), autour d'un axe ($y_E$) perpendiculaire au plan d'incidence qui contient l'axe sur lequel est centré le faisceau lumineux (F) incident sur la lame (3) ainsi que l'axe sur lequel est centré le faisceau lumineux (F) réfléchi par la lame (3).

7. Afficheur selon l'une des revendications 1 à 6, dans lequel l'axe (H) qui passe par le premier point d'observation (P1) et par le deuxième point d'observation (P2) est perpendiculaire au plan d'incidence contenant l'axe sur lequel est centré le faisceau lumineux (F) incident sur la lame (3) ainsi que l'axe sur lequel est centré le faisceau lumineux (F) réfléchi par la lame (3).

8. Afficheur selon l'une des revendications 1 à 7, dans ledit taux de déformation est un taux de cisaillement de la deuxième image virtuelle (IMV2) par rapport à la première image virtuelle (IMV1).

9. Afficheur selon la revendication 8, dans lequel ledit taux de cisaillement est représentatif d'une déformation par cisaillement selon une direction de cisaillement parallèle à l'axe (H) passant par le premier point d'observation (P1) et par le deuxième point d'observation (P2).

10. Afficheur selon l'une des revendications 1 à 7, dans lequel ledit taux de déformation est un taux de variation de rapport d'aspect de la deuxième image virtuelle (IMV1) par rapport à la première image virtuelle (IMV2).

# Fig.1

art antérieur

5'

IMV'

6'

1' 3' 21' 2' F'

# Fig.2

1

5 3 Z0 P1

30 R

R

Ch

h

N α F

F

D

4

21

2 yE

22

x

z

y

# Fig.3

# Fig.4A

# Fig.4B

# Fig.5A

# Fig.5B

EP 3 525 032 A1

**Fig.6A**

IMG

**Fig.6D**

IMV1'

**Fig.6B**

IMV1

**Fig.6E**

IMV1"

**Fig.6C**

IMV2

**Fig.6F**

IMV2"

Europäisches
Patentamt

European
Patent Office

Office européen
des brevets

# RAPPORT DE RECHERCHE EUROPEENNE

Numéro de la demande

EP 19 15 6038

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP H10 10464 A (ASAHI GLASS CO LTD) 16 janvier 1998 (1998-01-16) * alinéa [0035] * ----- | 1-4,6-10 | INV. G02B27/01 |
| X | US 5 708 413 A (OKUYAMA HIDEKI [JP] ET AL) 13 janvier 1998 (1998-01-13) | 1,6-10 | |
| Y | * colonne 4, ligne 31 - ligne 48 * * figure 1 * ----- | 5 | |
| Y | EP 3 067 732 A1 (RICOH CO LTD [JP]) 14 septembre 2016 (2016-09-14) * alinéa [0003] * ----- | 5 | |

DOMAINES TECHNIQUES
RECHERCHES (IPC)

G02B

Le présent rapport a été établi pour toutes les revendications

| Lieu de la recherche | Date d'achèvement de la recherche | Examinateur |
|---|---|---|
| Munich | 10 avril 2019 | Denise, Christophe |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.....................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 19 15 6038

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2019

| Document brevet cité au rapport de recherche | | Date de publication | Membre(s) de la famille de brevet(s) | | Date de publication |
|---|---|---|---|---|---|
| JP H1010464 | A | 16-01-1998 | AUCUN | | |
| US 5708413 | A | 13-01-1998 | JP | H0930289 A | 04-02-1997 |
| | | | US | 5708413 A | 13-01-1998 |
| EP 3067732 | A1 | 14-09-2016 | EP | 3067732 A1 | 14-09-2016 |
| | | | JP | 2016170185 A | 23-09-2016 |
| | | | US | 2016266384 A1 | 15-09-2016 |
| | | | US | 2017227761 A1 | 10-08-2017 |

EPO FORM P0460

Pour tout renseignement concernant cette annexe : voir Journal Officiel de l'Office européen des brevets, No.12/82